# DEMANDE DE BREVET EUROPEEN

(11) **EP 0 688 848 A1**
(43) Date de publication de la demande: **27.12.1995**
(21) Numéro de dépôt: 95401414.8
(22) Date de dépôt: 16.06.1995
(51) Int. Cl.: C09K 7/06, C10M 101/04, C11D 1/12, A23D 7/00

(54) **Système concentré à base d'un agent épaississant, ledit système étant dispersable et épaississable par dilution en milieu aqueux**

(30) Priorité: 22.06.1994 FR 9407660
(71) Demandeur: RHONE-POULENC CHIMIE, 92408 Courbevoie Cédex (FR)
(72) Inventeur: Guillou, Véronique, F-92150- Suresnes (FR); Morvan, Mikel, F-92400 Courbevoie (FR); Knipper, Magali, F-75019 Paris (FR)
(74) Mandataire: Fabre, Madeleine-France

(57) **Abrégé**

Système concentré en milieu apolaire (Syst), comprenant :
- un véhicule apolaire (VApo),
- un agent susceptible d'épaissir les milieux aqueux (EpAq), mais non susceptible d'épaissir les milieux apolaires,
- un agent épaississant des milieux apolaires (EpApo), constitué d'un mélange d'un tensio-actif "multicaténaire" (TA) soluble ou dispersable dans le véhicule apolaire (VApo), et d'un sel d'acide organique (Sel) non soluble dans le véhicule apolaire (VApo),
- un constituant polaire (Pol) introduit dans ledit système (Syst) par l'intermédiaire d'au moins un des constituants dudit système (Syst), en quantité permettant de solubiliser au moins 1 % en poids du sel d'acide organique (Sel), mais pas plus de 80% dudit sel d'acide organique (Sel),
- éventuellement un agent susceptible d'émulsifier ledit véhicule apolaire dans l'eau ou dans un milieu aqueux.

Selon la nature de ses différents constituants, ledit système peut être mis en oeuvre, après dilution dans l'eau ou dans un milieu aqueux, pour la formulation de fluides de forage à base d'eau, pour la préparation de mélasses utiles en alimentation animale ou humaine ou comme agent de nettoyage industriel.

## Description

La présente invention a pour objet un système en milieu apolaire constitué d'une suspension concentrée stable d'au moins un agent épaississant en milieu aqueux mais non épaississant en milieu apolaire, ledit système étant dispersable et épaississable par dilution dans un milieu aqueux. Se présentant sous une forme pompable, ledit système peut être mis en oeuvre pour la formulation de fluide de forage à base d'eau (fluides pour tunnelier), ainsi qu'après un choix adapté de ses constituants, pour la préparation de mélasses utiles en alimentation animale ou humaine. Ledit système peut également être utilisé, après dilution dans l'eau ou dans un milieu aqueux, comme agent de nettoyage industriel, notamment pour le nettoyage de surfaces verticales (murs ...), l'agent de nettoyage pouvant être présent dans ledit système et/ou dans le milieu aqueux.

Ledit système concentré en milieu apolaire (Syst), faisant l'objet de l'invention est caractérisé en ce qu'il comprend :
- de l'ordre de 40 à 90%, de préférence de l'ordre de 45 à 80% en poids d'un milieu de suspension apolaire ou véhicule apolaire (VApo)
- de l'ordre de 0,5 à 55%, de préférence de l'ordre de 2 à 50% en poids d'au moins un agent susceptible d'épaissir les milieux aqueux (EpAq) mais non susceptible d'épaissir les milieux apolaires
- de l'ordre de 0,5 à 15%, de préférence de l'ordre de 1 à 10% en poids d'au moins un agent épaississant des milieux apolaires (EpApo), constitué d'un mélange d'un tensio-actif "multicaténaire" (TA) soluble ou dispersable dans le véhicule apolaire (VApo) et d'un sel d'acide organique (Sel) non soluble dans le véhicule apolaire (VApo), le rapport pondéral tensio-actif "multicaténaire" (TA) / sel organique (Sel) étant de l'ordre de 60/40 à 99,5 /0,5 , de préférence de l'ordre de 80/20 à 99/1
- un constituant polaire (Pol) introduit dans ledit système (Syst) par l'intermédiaire d'au moins un des constituants dudit système (Syst) , en quantité permettant de solubiliser au moins 1 % en poids du sel d'acide organique (Sel) mais pas plus de 80%, et de préférence de l'ordre de 5 à 50%, dudit sel d'acide organique (Sel)
- et éventuellement de l'ordre de 0,5 à 15% en poids d'un agent susceptible d'émulsifier ledit milieu apolaire dans l'eau ou dans un milieu aqueux.

On entend par "milieu de suspension apolaire ou véhicule apolaire (VApo)", tout constituant liquide à la température de préparation ou d'utilisation dudit système, qui, situé dans l'espace de solubilité de HANSEN (Handbook of solubility parameters and other cohesion parameters - Allan F.M. BARTON, CRC Press Inc., 1983 -), présente les paramètres suivants :
. δP d'interactions Keesom inférieur à 10 (J/cm³)^{1/2}
. δH de liaisons hydrogène inférieur à 10 (J/cm³)^{1/2}
. δD d'interactions London supérieur à 15 (J/cm³)^{1/2}
A titre d'exemple de milieu de suspension apolaire ou véhicule apolaire (VApo), on peut citer :
. les triglycérides d'acides gras saturés ou insaturés ayant au moins 12 atomes de carbone et de préférence de 14 à 20 atomes de carbone ; il peut s'agir de triglycérides de synthèse ou de préférence naturels, tels que les huiles végétales du type huile de colza, huile de soja, huile d'arachide, huile de beurre, huile de graine de coton, huile de lin, huile de noix de coco, huile d'olive, huile de palme, huile de pépin de raisin, huile de poisson, huile de ricin, huile de coprah,
. les coupes pétrolières aromatiques,
. les composés terpéniques (D-limonène, L-limonène ...),
. les mélanges de diesters succinate/adipate/glutarate de diméthyle,
. les hydrocarbures aliphatiques contenant au moins 6 atomes de carbone (isooctane, kerosène, essence, essence diesel, huiles minérales, huiles lubrifiantes...).

A titre d'agent susceptible d'épaissir les milieux aqueux (EpAq) mais non susceptible d'épaissir les milieux apolaires, on peut citer notamment les polysaccharides d'origine bactérienne (la gomme xanthane, le succinoglucane, le rhamsan, le welan, le gellan ...), les galactomannanes (gommes guar et leurs dérivés, caroube, tara ...), les carraghénanes, les alginates, les carboxyméthylcelluloses, les méthylcelluloses, les hydroxypropylcelluloses, les hydroxyéthylcelluloses, les polyacrylates de métaux alcalins, les alcools polyvinyliques, les polyéthylène glycols, les polyvinylpyrrolidones ... seuls ou en association entre eux.

On entend par tensio-actif "multicaténaire", tout tensio-actif constitué d'au moins deux chaînes hydrophobes reliées par l'intermédiaire d'une tête hydrophile.
A titre d'exemples, on peut citer
. les dialkylsulfosuccinates de métaux alcalins, tels que le bis(2-éthylhexyl)sulfosuccinate de sodium (deux chaînes octyles reliées par la tête hydrophile sulfosuccinate de sodium),
. les alkylarylsulfonates de métaux alcalino-terreux, tels que le dodécylbenzène sulfonate de calcium (deux chaînes dodécylbenzène reliées par la tête hydrophile disulfonate de Ca),
. les phospholipides, tels que la phosphatidylcholine, la lysophosphatidylcholine, la phosphatidyl éthanolamine, le phosphatidylinositol, contenus dans les lécithines d'origine animale (oeuf) ou d'origine végétale (soja ...)
. les sucroglycérides ...
On entend par le terme "sucroglycéride", le mélange obtenu par transestérification du saccharose et de triglycérides d'acides gras saturés ou insaturés ayant au moins 12 atomes de carbone, et de préférence de 14 à 20 atomes de carbone ; il peut s'agir de triglycérides de synthèse ou de préférence naturels, tels que les huiles végétales ou animales du type huile de colza, huile de soja, saindoux, suif, huile d'arachide, huile de beurre, huile de graine de coton, huile de lin, huile de noix de coco, huile d'olive, huile de palme, huile de pépin de raisin, huile de poisson, huile de ricin, huile de coprah.
Il s'agit préférentiellement des sucroglycérides de saindoux, de suif, d'huile de palme, de coprah ou de colza. Ils se présentent sous une forme liquide ou sous forme de pâtes plus ou moins consistantes, se différenciant commercialement par leur point de fusion. Un mode de préparation des sucroglycérides est notamment décrit dans la demande de brevet FR-A-2 463 512.

Parmi les sels d'acide organique (Sel) non solubles dans le milieu apolaire, on peut citer les sels de métaux alcalins ou d'ammonium d'acides carboxyliques aliphatiques ou aromatiques, tels que le benzoate de sodium, le propionate de sodium, I'acétate de sodium ...

A titre d'agent épaississant des milieux apolaires (EpApo), on peut citer tout particulièrement les associations dioctylsulfosuccinate de sodium / benzoate de sodium, dioctylsulfosuccinate de sodium / propionate de sodium, dioctylsulfosuccinate de sodium / acétate de sodium, dodécylbenzène sulfonate de calcium / benzoate de sodium, lécithine / benzoate de sodium, sucroglycérides / benzoate de sodium, sucroglycérides / propionate de sodium, sucroglycérides / acétate de sodium, lécithine / benzoate de sodium, lécithine / propionate de sodium, lécithine / acétate de sodium.

Comme exemple d'agent susceptible d'émulsifier ledit milieu apolaire dans l'eau ou dans un milieu aqueux, on peut citer les tristyrylphénols éthoxylés, les sulfates ou phosphates de tristyrylphénols éthoxylés et/ou propoxylés, les acides ou les alcools gras éthoxylés et/ou propoxylés, les copolymères blocs éthoxylés/propoxylés.

On entend par "composé polaire" (Pol), tout constituant liquide à la température de préparation ou d'utilisation dudit système, qui, situé dans l'espace de solubilité de HANSEN, présente les paramètres suivants:
. δP d'interactions Keesom supérieur à 8 (J/cm³)^{1/2}
. δH de liaisions hydrogène supérieur à 17 (J/cm³)^{1/2}
. δD d'interactions London compris entre 13 et 17 (J/cm³)^{1/2}
Parmi ceux-ci, on peut citer l'eau, le formamide, le glycérol, I'éthanol ...
Le composé polaire préféré est l'eau ; celle-ci est introduite par l'intermédiaire d'au moins un des constituant du système, notamment par l'intermédiaire de l'agent épaississant des milieux apolaires (EpApo).

Ledit système faisant l'objet de l'invention peut contenir en outre divers additifs, notamment des additifs non solubles dans le milieu de suspension apolaire, tels que des charges du type silice, carbonate de calcium ..., des composés basiques solubles dans l'eau tels que les métasilicates de sodium, les argiles, les phosphates alcalins, de la soude solide ...

Ledit système en milieu apolaire (Syst), faisant l'objet de l'invention, peut être préparé en deux étapes :
- une première étape consistant à mettre en présence le véhicule apolaire (VApo) avec l'agent épaississant des milieux apolaires (EpApo) contenant le constituant polaire (Pol), puis
- une deuxième étape, consistant à introduire dans le mélange ainsi obtenu, l'agent susceptible d'épaissir les milieux aqueux (EpAq) mais non susceptible d'épaissir les milieux apolaires,
l'émulsifiant éventuel étant introduit de préférence à la première étape.

Un mode préférentiel de réalisation de la première étape consiste à introduire dans le véhicule apolaire (VApo) porté à une température de l'ordre de 30 à 100°C, généralement de l'ordre de 50 à 80°C, la quantité requise d'agent épaississant des milieux apolaires (EpApo) et l'émulsifiant éventuel, et à disperser l'ensemble à l'aide d'un homogénéiseur.
Pour une bonne réalisation de cette étape, l'agent épaississant des milieux apolaires (EpApo) contenant le constituant polaire (Pol), est préalablement préparé par homogénéisation d'un mélange du tensio-actif "multicaténaire" (TA), et d'une solution dans le constituant polaire (Pol) du sel d'acide organique (Sel), puis évaporation de la quantité excédente de constituant polaire (Pol).

La deuxième étape est favorablement réalisée à une température de l'ordre de 30 à 80°C, par introduction dans le milieu épaissi préparé à la première étape, de la quantité requise d'agent susceptible d'épaissir les milieux aqueux (EpAq) mais non susceptible d'épaissir les milieux apolaires, sous agitation à l'aide d'un dispositif du type pale déflocculeuse.

Selon la nature et les quantités relatives de ses différents constituants, le système faisant l'objet de l'invention peut être mis en oeuvre, après dilution dans l'eau ou dans un milieu aqueux, pour la formulation de fluides de forage à base d'eau, notamment comme fluide pour tunnelier, pour la préparation de mélasses utiles en alimentation animale ou humaine ou comme agent de nettoyage industriel.

Un autre objet de l'invention consiste donc en un système spécifique, particulièrement utilisable, après dilution dans l'eau, pour la formulation de fluide de forage à base d'eau.
Ledit système en milieu apolaire (Syst S1) utile pour la formulation de fluide de forage à base d'eau, est caractérisé en ce qu'il comprend :
- de l'ordre de 40 à 70 %, de préférence de l'ordre de 50 à 60 % en poids d'un milieu de suspension apolaire ou véhicule apolaire (VApo)
- de l'ordre de 20 à 50 %, de préférence de l'ordre de 25 à 45 % en poids d'au moins un agent susceptible d'épaissir les milieux aqueux (EpAq) mais non susceptible d'épaissir les milieux apolaires
- de l'ordre de 0,5 à 5 %, de préférence de l'ordre de 1,5 à 4 % en poids d'au moins un agent épaississant des milieux apolaires (EpApo), constitué d'un mélange d'un tensio-actif "multicaténaire" (TA) soluble ou dispersable dans le véhicule apolaire (VApo) et d'un sel d'acide organique (Sel) non soluble dans le véhicule apolaire (VApo), le rapport pondéral tensio-actif "multicaténaire" (TA) / sel organique (Sel) étant de l'ordre de 60/40 à 99,5 /0,5 , de préférence de l'ordre de 80/20 à 99/1
- un constituant polaire (Pol) introduit dans ledit système (Syst S1) par l'intermédiaire d'au moins un des constituants dudit système (Syst S1), en quantité permettant de solubiliser au moins 1 % en poids du sel d'acide organique (Sel) mais pas plus de 80%, de préférence de l'ordre de 5 à 50%, dudit sel d'acide organique (Sel)
- éventuellement de l'ordre de 1 à 10 % en poids d'un agent susceptible d'émulsifier ledit milieu apolaire dans l'eau ou dans un milieu aqueux.

Les constituants pouvant entrer dans la compositions dudit système (Syst S1) sont ceux déjà mentionnés ci-dessus concernant le système général (Syst).

Un système (Syst S'1), utile pour la formulation de fluide de forage à base d'eau et tout particulièrement intéressant de par son respect de l'environnement, est celui comprenant :
- de l'ordre de 40 à 70 %, de préférence de l'ordre de 50 à 60 % en poids d'un milieu de suspension apolaire ou véhicule apolaire (VApo) choisi parmi les triglycérides naturels
- de l'ordre de 20 à 50 %, de préférence de l'ordre de 25 à 45 % en poids d'au moins un agent susceptible d'épaissir les milieux aqueux (EpAq) mais non susceptible d'épaissir les milieux apolaires, choisi parmi les polysaccharides d'origine bactérienne, les galactomannanes, les carraghénanes, les alginates, les carboxyméthylcelluloses, les méthylcelluloses, les hydroxypropylcelluloses, les hydroxyéthylcelluloses
- de l'ordre de 0,5 à 5 %, de préférence de l'ordre de 1,5 à 4 % en poids d'au moins un agent épaississant des milieux apolaires (EpApo), constitué d'un mélange d'un tensio-actif "multicaténaire" (TA) soluble ou dispersable dans le véhicule apolaire (VApo), choisi parmi les dialkylsulfosuccinates de métaux alcalins, les alkylarylsulfonates de métaux alcalino-terreux, les phospholipides, les sucroglycérides, et d'un sel d'acide organique (Sel) non soluble dans le véhicule apolaire (VApo), choisi parmi le benzoate de sodium, le propionate de sodium, I'acétate de sodium, le rapport pondéral tensio-actif "multicaténaire" (TA) / sel organique (Sel) étant de l'ordre de 60/40 à 99,5 /0,5, de préférence de l'ordre de 80/20 à 99/1
- de l'eau comme constituant polaire (Pol), introduite dans ledit système (Syst S'1) par l'intermédiaire d'au moins un des constituants dudit système (Syst S'1), en quantité permettant de solubiliser au moins 1 % en poids du sel d'acide organique (Sel) mais pas plus de 80%, de préférence de l'ordre de 5 à 50%, dudit sel d'acide organique (Sel)
- et éventuellement de l'ordre de 1 à 10 % en poids d'un agent susceptible d'émulsifier ledit milieu apolaire dans l'eau ou dans un milieu aqueux, choisi parmi les acides ou les alcools gras éthoxylés et/ou propoxylés.

Parmi les triglycérides naturels constituant le véhicule apolaire (VApo), on peut citer les huiles végétales du type huile de colza, huile de soja, huile d'arachide, huile de beurre, huile de graine de coton, huile de lin, huile de noix de coco, huile d'olive, huile de palme, huile de pépin de raisin, huile de poisson, huile de ricin, huile de coprah.

Parmi les polysaccharides d'origine bactérienne susceptibles d'épaissir les milieux aqueux (EpAq), on peut citer la gomme xanthane, le succinoglucane, le rhamsan, le welan, le gellan ... ; parmi les galactomannanes on peut citer les gommes guar, caroube, tara ...

Les systèmes (Syst S1 et S'1) faisant l'objet de l'invention, peuvent ensuite être dilués dans l'eau ou dans un milieu aqueux, jusqu'à obtenir une concentration en agent susceptible d'épaissir les milieux aqueux (EpAq), mais non susceptible d'épaissir les milieux apolaires, introduit par l'intermédiaire dudit système (Syst S1 ou S'1), de l'ordre de 0,01 à 3, de préférence de l'ordre de 0,01 à 1 partie en poids, dans 100 parties d'eau.

Un autre objet de l'invention consiste également en un système en milieu apolaire (Syst S2), pouvant être appliqué à la préparation de mélasses utiles en alimentation animale ou humaine.

Ledit système en milieu apolaire (Syst S2) est caractérisé en ce qu'il comprend :
- de l'ordre de 40 à 70 %, de préférence de l'ordre de 50 à 60 % en poids d'un milieu de suspension apolaire ou véhicule apolaire (VApo) choisi les triglycérides naturels
- de l'ordre de 20 à 50 %, de préférence de l'ordre de 30 à 40 % en poids d'au moins un agent susceptible d'épaissir les milieux aqueux (EpAq) mais non susceptible d'épaissir les milieux apolaires, choisi parmi la gomme xanthane, les galactomannes, les carraghénanes, les alginates
- de l'ordre de 1 à 10 %, de préférence de l'ordre de 2 à 7 % en poids d'au moins un agent épaississant des milieux apolaires (EpApo), constitué d'un mélange d'un tensio-actif "multicaténaire" (TA) soluble ou dispersable dans le véhicule apolaire (VApo), choisi parmi les lécithines et les sucroglycérides, et de benzoate de sodium comme sel d'acide organique (Sel) non soluble dans le véhicule apolaire (VApo),
   le rapport pondéral tensio-actif "multicaténaire" (TA) / sel organique (Sel) étant de l'ordre de 60/40 à 99,5 /0,5, de préférence de l'ordre de 80/20 à 99/1
- et de l'eau comme constituant polaire (Pol), introduite dans ledit système (Syst S2) par l'intermédiaire d'au moins un des constituants dudit système (Syst S2), en quantité permettant de solubiliser au moins 1 % en poids du sel d'acide organique (Sel) mais pas plus de 80%, de préférence de l'ordre de 5 à 50%, dudit sel d'acide organique (Sel).

Parmi les triglycérides naturels constituant le véhicule apolaire (VApo), on peut citer les huiles végétales du type huile de colza, huile de soja, huile d'arachide, huile de beurre, huile de graine de coton, huile de lin, huile de noix de coco, huile d'olive, huile de palme, huile de pépin de raisin, huile de poisson, huile de ricin, huile de coprah.

Le système (Syst S2) faisant l'objet de l'invention, peut ensuite être dilué dans l'eau ou dans un milieu aqueux, jusqu'à obtenir une concentration en agent susceptible d'épaissir les milieux aqueux (EpAq), mais non susceptible d'épaissir les milieux apolaires, introduit par l'intermédiaire dudit système (Syst S2), de l'ordre de 0,01 à 3, de préférence de l'ordre de 0,01 à 2 parties en poids, dans 100 parties d'eau.

L'invention a en outre pour objet un système en milieu apolaire (Syst S3), utile comme agent de nettoyage industriel, après dilution dans l'eau ou dans un milieu aqueux.

Ledit système en milieu apolaire (Syst S3), est caractérisé en ce qu'il comprend :
- de l'ordre de 60 à 90 %, de préférence de l'ordre de 70 à 80 % en poids d'un milieu de suspension apolaire ou véhicule apolaire (VApo), choisi parmi les solvants actifs des graisses ou des salissures d'origine animale
- de l'ordre de 2 à 20 %, de préférence de l'ordre de 5 à 10 % en poids d'au moins un agent susceptible d'épaissir les milieux aqueux (EpAq) mais non susceptible d'épaissir les milieux apolaires
- de l'ordre de 2 à 20 %, de préférence de l'ordre de 5 à 10 % en poids d'au moins un agent épaississant des milieux apolaires (EpApo), constitué d'un mélange d'un tensio-actif "multicaténaire" (TA) soluble ou dispersable dans le véhicule apolaire (VApo) et d'un sel d'acide organique (Sel) non soluble dans le véhicule apolaire (VApo),
   le rapport pondéral tensio-actif "multicaténaire" (TA) / sel organique (Sel) étant de l'ordre de 60/40 à 99,5 /0,5, de préférence de l'ordre de 80/20 à 99/1
- un constituant polaire (Pol) introduit dans ledit système (Syst S3) par l'intermédiaire d'au moins un des constituants dudit système (Syst S3), en quantité permettant de solubiliser au moins 1 % en poids du sel d'acide organique (Sel) mais pas plus de 80%, de préférence de l'ordre de 5 à 50%, dudit sel d'acide organique (Sel)
- et éventuellement de l'ordre de 0,5 à 15 % en poids d'un agent susceptible d'émulsifier ledit milieu apolaire dans l'eau ou dans un milieu aqueux.

A titre d'exemple de solvant actif, on peut mentionner les composés terpéniques tels que le D-limonène, les coupes pétrolières, les hydrocarbures aliphatiques (essence), les mélanges de diesters succinate/adipate/glutarate de diméthyle ....

Les autres constituants pouvant entrer dans la compositions dudit système (Syst S3) sont ceux déjà mentionnés ci-dessus concernant le système général (Syst).

Le système (Syst S3) faisant l'objet de l'invention, peut ensuite être dilué dans l'eau ou dans un milieu aqueux, jusqu'à obtenir une concentration en agent susceptible d'épaissir les milieux aqueux (EpAq), mais non susceptible d'épaissir les milieux apolaires, introduit par l'intermédiaire dudit système (Syst S3), de l'ordre de 0,1 à 1, de préférence de l'ordre de 0,2 à 0,5 parties en poids, dans 100 parties d'eau. Ledit système s'autoémulsionne dans le milieu qui s'épaissit jusqu'à une valeur viscosité BROOKFIELD de l'ordre de 800 à 900 mPas., viscosité mesurée à l'aide d'un viscosimètre BROOKFIELD à 10 tours/minute à l'aide du mobile n°2, à 25°C. Après projection sur une surface verticale, I'émulsion s'écoule lentement. Cette émulsion peut favorablement être utilisée pour le dégraissage ou le nettoyage de surfaces dans les abattoirs pour animaux, volailles, dans les rôtisseries industrielles ....

Les exemples suivants sont donnés à titre illustratif.

### Exemple 1

### Protocole général de préparation du système concentré en milieu apolaire (Syst)

Le véhicule apolaire (VApo) est placé dans un conteneur de 1 litre, puis porté à une température voisine de 80°C.
On introduit dans le milieu la quantité requise d'agent épaississant (EpApo) du milieu apolaire, préalablement préparé, ainsi que l'éventuel agent susceptible d'émulsifier le véhicule apolaire dans l'eau ; l'ensemble est dispersé à l'aide d'une pale déflocculeuse Rayneri® commercialisée par Rayneri, tournant à 400 tours /minute pendant 1 minute, puis homogéneisé à l'aide d'un Ultra-Turrax®T50 (commercialisé par Ultra-Turrax) de 670W de puissance et tournant à 8000 tours/minute, pendant 7 minutes. La température finale du milieu est de l'ordre de 100°C.
On laisse refroidir le milieu jusqu'à une température de l'ordre de 80°C, puis on ajoute dans le milieu épaissi ainsi obtenu, sous agitation à l'aide d'une pale déflocculeuse Rayneri® tournant à 500 tours /minute, la quantité requise d'agent épaississant des milieux aqueux (EpAq) ; l'agitation est maintenue pendant 5 minutes.

### Mode opératoire de préparation du mélange épaississant (EpApo) du véhicule apolaire

On introduit dans un conteneur de 500ml, le tensio-actif "multicaténaire" (TA) et une solution aqueuse de sel d'acide organique (Sel) ; le mélange est homogénéisé par agitation à l'aide d'une pale déflocculeuse Rayneri® tournant à 400 tours/minute.
L'eau en excès est ensuite évaporée.
Ainsi un mélange épaississant constitué de dioctyl sulfosuccinate de sodium, de benzoate de sodium et d'eau, est préparé comme indiqué ci-dessus, à partir d'environ 63 parties en poids de dioctyl sulfosuccinate de sodium et de 37 parties environ d'une solution aqueuse à 30% en poids de benzoate de sodium. L'excès d'eau est évaporé jusqu'à une teneur en eau résiduelle permettant de solubiliser environ 10% du poids de benzoate de sodium.

### Exemple 2

### Système concentré en milieu apolaire épaississant à la dilution, pour la formulation de fluide de forage

On prépare selon le mode opératoire décrit à l'exemple 1 le système suivant :

| ingrédients | % poids |
|---|---|
| huile de colza | 53,35 |
| dioctyl sulfosuccinate de sodium | 1,35 |
| benzoate de sodium | 0,25 |
| eau | 0,05 |
| xanthane | 45 |

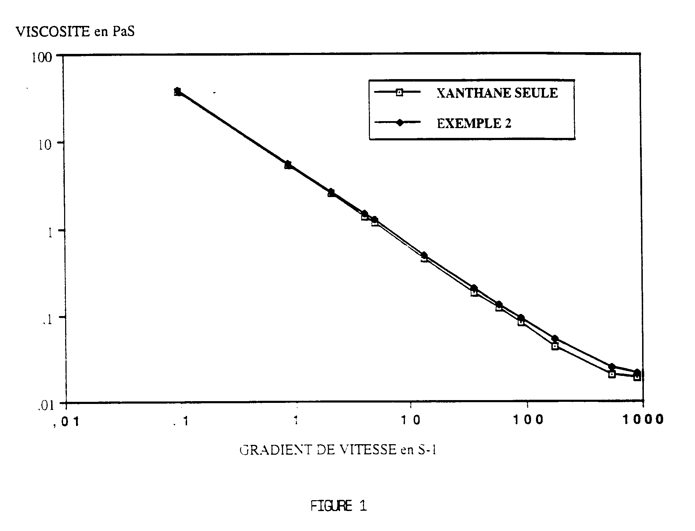

Le système obtenu est dispersé dans de l'eau, selon une quantité permettant d'obtenir un milieu dilué présentant une concentration en gomme xanthane de 0,5% en poids. La figure 1 montre que la variation de viscosité dynamique du milieu obtenu en fonction du gradient de vitesse, mesurée à l'aide du Rheomat 115® commercialisé par Contraves, est pratiquement semblable à celle d'une solution de gomme Xanthane à 0,5% dans l'eau.
La dispersion obtenue est donc pompable.

### Exemple 3

### Système concentré en milieu apolaire épaississant à la dilution. pour la formulation de mélasses utiles en alimentation animale ou humaine

On prépare selon le mode opératoire décrit à l'exemple 1 le système suivant :

| ingrédients | % poids |
|---|---|
| huile de colza | 54,9 |
| lécithine de soja | 4,25 |
| benzoate de sodium | 0,75 |
| eau | 0,1 |
| xanthane | 40 |

Le système obtenu est dispersé dans de l'eau, selon une quantité permettant d'obtenir un milieu dilué présentant une concentration en gomme xanthane de 0,3% en poids. La dispersion obtenue est pompable.

### Exemple 4

### Système concentré en milieu apolaire épaississant à la dilution, pour le nettoyage industriel

On prépare selon le mode opératoire décrit à l'exemple 1 le système suivant :

| ingrédients | % poids |
|---|---|
| D-limonène | 78,3 |
| dioctyl sulfosuccinate de sodium | 6,6 |
| benzoate de sodium | 1,2 |
| eau | 0,2 |
| xanthane | 6,0 |
| alcool isodécylique éthoxylé à 6 moles de OE | 7,7 |

Le concentré est dilué dans de l'eau de ville de façon à obtenir une concentration de 0,3% de gomme xanthane.
Une émulsion se forme instantanément ; celle-ci épaissit et présente une viscosité Brookfield mesurée à 10 tours/mn à l'aide du mobile n° 2, à 25°C, de l'ordre de 800 à 900 mPa.s.
La dispersion obtenue est pompable.
Après projection sur une surface verticale ou inclinée, celle ci s'écoule lentement, ce qui permet un dégraissage maximal de la surface.

## Revendications

**1)** Système concentré en milieu apolaire (Syst), caractérisé en ce qu'il comprend :
- de l'ordre de 40 à 90%, de préférence de l'ordre de 45 à 80% en poids d'un milieu de suspension apolaire ou véhicule apolaire (VApo)
- de l'ordre de 0,5 à 55%, de préférence de l'ordre de 2 à 50% en poids d'au moins un agent susceptible d'épaissir les milieux aqueux (EpAq) mais non susceptible d'épaissir les milieux apolaires
- de l'ordre de 0,5 à15%, de préférence de l'ordre de 1 à 10% en poids d'au moins un agent épaississant des milieux apolaires (EpApo), constitué d'un mélange d'un tensio-actif "multicaténaire" (TA) soluble ou dispersable dans le véhicule apolaire (VApo) et d'un sel d'acide organique (Sel) non soluble dans le véhicule apolaire (VApo), le rapport pondéral tensio-actif "multicaténaire" (TA) / sel organique (Sel) étant de l'ordre de 60/40 à 99,5 /0,5, de préférence de l'ordre de 80/20 à 99/1
- un constituant polaire (Pol) introduit dans ledit système (Syst) par l'intermédiaire d'au moins un des constituants dudit système (Syst), en quantité permettant de solubiliser au moins 1 % en poids du sel d'acide organique (Sel) mais pas plus de 80% et de préférence de l'ordre de 5 à 50%, dudit sel d'acide organique (Sel)
- et éventuellement de l'ordre de 0,5 à 15% en poids d'un agent susceptible d'émulsifier ledit milieu apolaire dans l'eau ou dans un milieu aqueux.

**2)** Système concentré selon la revendication 1), caractérisé en ce que le véhicule apolaire (VApo) est choisi parmi les triglycérides d'acides gras saturés ou insaturés ayant au moins 12 atomes de carbone et de préférence de 14 à 20 atomes de carbone, les coupes pétrolières aromatiques, les composés terpéniques, les mélanges de diesters succinate/adipate/glutarate de diméthyle, les hydrocarbures aliphatiques contenant au moins 6 atomes de carbone.

**3)** Système concentré en milieu apolaire, selon la revendication 1) ou 2), caractérisé en ce que l'agent susceptible d'épaissir les milieux aqueux (EpAq), mais non susceptible d'épaissir les milieux apolaires, est choisi parmi les polysaccharides d'origine bactérienne, les galactomannanes, les carraghénanes, les alginates, les carboxyméthylcelluloses, les méthylcelluloses, les hydroxypropylcelluloses, les hydroxyéthylcelluloses, les polyacrylates de métaux alcalins, les alcools polyvinyliques, les polyéthylène glycols, les polyvinylpyrrolidones, seuls ou en association entre eux.

**4)** Système concentré en milieu apolaire, selon l'une quelconque des revendications 1) à 3), caractérisé en ce que le tensio-actif "multicaténaire" (TA) est choisi parmi les dialkylsulfosuccinates de métaux alcalins, les alkylarylsulfonates de métaux alcalino-terreux, les phospholipides, les sucroglycérides.

**5)** Système concentré en milieu apolaire, selon l'une quelconque des revendications 1) à 4), caractérisé en ce que le sel d'acide organique (Sel) non soluble dans le milieu apolaire est un sel de métal alcalin ou d'ammonium d'acides carboxyliques aliphatiques ou aromatiques.

**6)** Système concentré en milieu apolaire, selon l'une quelconque des revendications 1) à 5), caractérisé en ce que l'agent épaississant des milieux apolaires (EpApo) est choisi parmi les associations dioctylsulfosuccinate de sodium / benzoate de sodium, dioctylsulfosuccinate de sodium / propionate de sodium, dioctylsulfosuccinate de sodium / acétate de sodium, dodécylbenzène sulfonate de calcium / benzoate de sodium, lécithine / benzoate de sodium, sucroglycérides / benzoate de sodium, sucroglycérides / propionate de sodium, sucroglycérides / acétate de sodium, lécithine / benzoate de sodium, lécithine / propionate de sodium, lécithine / acétate de sodium.

**7)** Système concentré en milieu apolaire, selon l'une quelconque des revendications 1) à 6), caractérisé en ce que le composé polaire (Pol) est choisi parmi l'eau, le formamide, le glycérol, I'éthanol.

**8)** Système concentré en milieu apolaire, selon la revendication 7), caractérisé en ce que le composé polaire (Pol) est de l'eau, introduite par l'intermédiaire de l'agent épaississant des milieux apolaires (EpApo).

**9)** Système concentré en milieu apolaire, selon l'une quelconque des revendications 1) à 8), caractérisé en ce que l'agent susceptible d'émulsifier ledit milieu apolaire dans l'eau ou dans un milieu aqueux est choisi parmi les tristyrylphénols éthoxylés, les sulfates ou phosphates de tristyrylphénols éthoxylés et/ou propoxylés, les acides ou les alcools gras éthoxylés et/ou propoxylés, les copolymères blocs éthoxylés/propoxylés.

**10)** Système en milieu apolaire (Syst S1), selon l'une quelconque des revendications précédentes, utile pour la formulation de fluide de forage à base d'eau, caractérisé en ce qu'il comprend :
- de l'ordre de 40 à 70 %, de préférence de l'ordre de 50 à 60 % en poids d'un milieu de suspension apolaire ou véhicule apolaire (VApo)
- de l'ordre de 20 à 50 %, de préférence de l'ordre de 25 à 45 % en poids d'au moins un agent susceptible d'épaissir les milieux aqueux (EpAq) mais non susceptible d'épaissir les milieux apolaires
- de l'ordre de 0,5 à 5 %, de préférence de l'ordre de 1,5 à 4 % en poids d'au moins un agent épaississant des milieux apolaires (EpApo), constitué d'un mélange d'un tensio-actif "multicaténaire" (TA) soluble ou dispersable dans le véhicule apolaire (VApo) et d'un sel d'acide organique (Sel) non soluble dans le véhicule apolaire (VApo),
le rapport pondéral tensio-actif "multicaténaire" (TA) / sel organique (Sel) étant de l'ordre de 60/40 à 99,5 /0,5, de préférence de l'ordre de 80/20 à 99/1
- un constituant polaire (Pol) introduit dans ledit système (Syst S1) par l'intermédiaire d'au moins un des constituants dudit système (Syst S1), en quantité permettant de solubiliser au moins 1 % en poids du sel d'acide organique (Sel) mais pas plus de 80%, de préférence de l'ordre de 5 à 50%, dudit sel d'acide organique (Sel)
- et éventuellement de l'ordre de 1 à 10 % en poids d'un agent susceptible d'émulsifier ledit milieu apolaire dans l'eau ou dans un milieu aqueux.

**11)** Système concentré en milieu apolaire (Syst S'1), selon la revendication 10), utile pour la formulation de fluide de forage à base d'eau, caractérisé en ce qu'il comprend :
- de l'ordre de 40 à 70 %, de préférence de l'ordre de 50 à 60 % en poids d'un milieu de suspension apolaire ou véhicule apolaire (VApo) choisi parmi les triglycérides naturels
- de l'ordre de 20 à 50 %, de préférence de l'ordre de 25 à 45 % en poids d'au moins un agent susceptible d'épaissir les milieux aqueux (EpAq) mais non susceptible d'épaissir les milieux apolaires, choisi parmi les polysaccharides d'origine bactérienne, les galactomannanes, les carraghénanes, les alginates, les carboxyméthylcelluloses, les méthylcelluloses, les hydroxypropylcelluloses, les hydroxyéthylcelluloses
- de l'ordre de 0,5 à 5 %, de préférence de l'ordre de 1,5 à 4 % en poids d'au moins un agent épaississant des milieux apolaires (EpApo), constitué d'un mélange d'un tensio-actif "multicaténaire" (TA) soluble ou dispersable dans le véhicule apolaire (VApo) choisi parmi les dialkylsulfosuccinates de métaux alcalins, les alkylarylsulfonates de métaux alcalino-terreux, les phospholipides, les sucroglycérides, et d'un sel d'acide organique (Sel) non soluble dans le véhicule apolaire (VApo), choisi parmi le benzoate de sodium, le propionate de sodium, l'acétate de sodium,
le rapport pondéral tensio-actif "multicaténaire" (TA) / sel organique (Sel) étant de l'ordre de 60/40 à 99,5 /0,5, de préférence de l'ordre de 80/20 à 99/1
- de l'eau comme constituant polaire (Pol), introduite dans ledit système (Syst S'1) par l'intermédiaire d'au moins un des constituants dudit système (Syst S'1), en quantité permettant de solubiliser au moins 1 % en poids du sel d'acide organique (Sel) mais pas plus de 80%, de préférence de l'ordre de 5 à 50%, dudit sel d'acide organique (Sel)
- et éventuellement de l'ordre de 1 à 10 % en poids d'un agent susceptible d'émulsifier ledit milieu apolaire dans l'eau ou dans un milieu aqueux choisi parmi les acides ou les alcools gras éthoxylés et/ou propoxylés.

**12)** Système concentré en milieu apolaire (Syst S2), selon la revendication 1), utile pour la préparation de mélasses pour alimentation humaine ou animale, caractérisé en ce qu'il comprend :
- de l'ordre de 40 à 70 % , de préférence de l'ordre de 50 à 60 % en poids d'un milieu de suspension apolaire ou véhicule apolaire (VApo) choisi les triglycérides naturels
- de l'ordre de 20 à 50 %, de préférence de l'ordre de 30 à 40 % en poids d'au moins un agent susceptible d'épaissir les milieux aqueux (EpAq) mais non susceptible d'épaissir les milieux apolaires, choisi parmi la gomme xanthane, les galactomannes, les carraghénanes, les alginates
- de l'ordre de 1 à 10 %, de préférence de l'ordre de 2 à 7 % en poids d'au moins un agent épaississant des milieux apolaires (EpApo), constitué d'un mélange d'un tensio-actif "multicaténaire" (TA) soluble ou dispersable dans le véhicule apolaire (VApo), choisi parmi les lécithines et les sucroglycérides, et de benzoate de sodium comme sel d'acide organique (Sel) non soluble dans le véhicule apolaire (VApo),
le rapport pondéral tensio-actif "multicaténaire" (TA) / sel organique (Sel) étant de l'ordre de 60/40 à 99,5 /0,5, de préférence de l'ordre de 80/20 à 99/1
- et de l'eau comme constituant polaire (Pol), introduite dans ledit système (Syst S2) par l'intermédiaire d'au moins un des constituants dudit système (Syst S2), en quantité permettant de solubiliser au moins 1 % en poids du sel d'acide organique (Sel) mais pas plus de 80%, de préférence de l'ordre de 5 à 50%, dudit sel d'acide organique (Sel).

**13)** Système concentré en milieu apolaire (Syst S3) selon la revendication 1) ou l'une quelconque des revendications 3) à 9), utile comme agent de nettoyage industriel, caractérisé en ce qu'il comprend :
- de l'ordre de 60 à 90 %, de préférence de l'ordre de 70 à 80 % en poids d'un milieu de suspension apolaire ou véhicule apolaire (VApo), choisi parmi les solvants actifs des graisses ou des salissures d'origine animale
- de l'ordre de 2 à 20 %, de préférence de l'ordre de 5 à 10 % en poids d'au moins un agent susceptible d'épaissir les milieux aqueux (EpAq) mais non susceptible d'épaissir les milieux apolaires
- de l'ordre de 2 à 20 %, de préférence de l'ordre de 5 à 10 % en poids d'au moins un agent épaississant des milieux apolaires (EpApo), constitué d'un mélange d'un tensio-actif "multicaténaire" (TA) soluble ou dispersable dans le véhicule apolaire (VApo), et d'un sel d'acide organique (Sel) non soluble dans le véhicule apolaire (VApo), le rapport pondéral tensio-actif "multicaténaire" (TA) / sel organique (Sel) étant de l'ordre de 60/40 à 99,5 /0,5, de préférence de l'ordre de 80/20 à 99/1
- un constituant polaire (Pol) introduit dans ledit système (Syst S3) par l'intermédiaire d'au moins un des constituants dudit système (Syst S3), en quantité permettant de solubiliser au moins 1 % en poids du sel d'acide organique (Sel) mais pas plus de 80%, de préférence de l'ordre de 5 à 50%, dudit sel d'acide organique (Sel)
- et éventuellement de l'ordre de 0,5 à 15 % en poids d'un agent susceptible d'émulsifier ledit milieu apolaire dans l'eau ou dans un milieu aqueux.

**14)** Procédé de préparation du système concentré en milieu apolaire faisant l'objet de l'une quelconque des revendications précédentes, caractérisé en ce qu'il comprend deux étapes
- une première étape consistant à mettre en présence le véhicule apolaire (VApo) avec l'agent épaississant des milieux apolaires (EpApo) contenant le constituant polaire (Pol), puis
- une deuxième étape, consistant à introduire dans le mélange ainsi obtenu, l'agent susceptible d'épaissir les milieux aqueux (EpAq) mais non susceptible d'épaissir les milieux apolaires,
l'émulsifiant éventuel étant introduit de préférence à la première étape.

**15)** Utilisation du système concentré en milieu apolaire (Syst S1 ou Syst S'1), faisant l'objet de la revendication 10) ou 11), pour la formulation de fluides de forage, après dilution dans l'eau ou dans un milieu aqueux, jusqu'à obtenir une concentration en agent susceptible d'épaissir les milieux aqueux (EpAq) mais non susceptible d'épaissir les milieux apolaires, introduit par l'intermédiaire dudit système (Syst S1 ou S'1), de l'ordre de 0,01 à 3, de préférence de l'ordre de 0,01 à 1 partie en poids, dans 100 parties d'eau.

**16)** Utilisation du système concentré en milieu apolaire (Syst S2), faisant l'objet de la revendication 12), pour la préparation de mélasses pour alimentation humaine ou animale, après dilution dans l'eau ou dans un milieu aqueux, jusqu'à obtenir une concentration en agent susceptible d'épaissir les milieux aqueux (EpAq) mais non susceptible d'épaissir les milieux apolaires, introduit par l'intermédiaire dudit système (Syst S2), de l'ordre de 0,01 à 3, de préférence de l'ordre de 0,01 à 2 parties en poids, dans 100 parties d'eau.

**17)** Utilisation du système concentré en milieu apolaire (Syst S3), faisant l'objet de la revendication 13), comme agent de nettoyage industriel, après dilution dans l'eau ou dans un milieu aqueux, jusqu'à obtenir une concentration en agent susceptible d'épaissir les milieux aqueux (EpAq) mais non susceptible d'épaissir les milieux apolaires, introduit par l'intermédiaire dudit système (Syst S3), de l'ordre de 0,1 à 1, de préférence de l'ordre de 0,2 à 0,5 parties en poids, dans 100 parties d'eau.
